# EUROPEAN PATENT APPLICATION

(11) **EP 4 187 340 A1**
(43) Date of publication of application: **31.05.2023**
(21) Application number: 21210309.7
(22) Date of filing: 24.11.2021
(51) Int. Cl.: G05B 23/02

(54) **A METHOD AND SYSTEM FOR MONITORING A DEVICE**

(71) Applicant: Heineken Supply Chain B.V., 1017 ZD Amsterdam (NL)
(72) Inventor: DEELEN, Willem Gerrit, 1017 ZD Amsterdam (NL); MAAGD, Michiel Herman, 1017 ZD Amsterdam (NL); BING, Xiaoyun, 1017 ZD Amsterdam (NL); RAMIREZ, Ramon Marin, 1017 ZD Amsterdam (NL); PAVLOVIC, David, 1017 ZD Amsterdam (NL)
(74) Representative: V.O.

(57) **Abstract**

A method and system is provided for monitoring an operational condition of a device. A set of data indicative of at least one operational parameter of the device within a predetermined time interval is received. Based on the set of data, an identifier which uniquely identifies the set of data is calculated. At least one deviation between the identifier and at least one reference identifier for the at least one operational parameter of the device is determined.

## Description

### TECHNICAL FIELD

The various aspects and variations thereof relate to a method and system for monitoring a device. Further, the various aspects and variations thereof relate to a device comprising a system for monitoring its operational condition. The various aspects and variations thereof also relate to a non-transitory computer-readable medium with software instructions and a computer program product.

### BACKGROUND

Monitoring operational conditions of devices is becoming more and more important. For example, predictive maintenance is widely employed for detecting operational anomalies in devices, machines or systems by performing data analysis. The goal is to detect possible defects in equipment and processes so that they can be fixed before they result in a failure or breakdown. Failure of critical machine components can result in production downtimes of hours, or even days since some parts are often not readily available. For instance, machinery critical for a brewery operation, such as fillers or vacuum pumps, may fail unexpectedly. This may cause significant amount of down-time in a large part of the production process, as resources and spare parts required to fix it may not be in stock.

If an anomalous operation of the device is caught early, the involved costs may be significantly lower. As time progresses, it may become more expensive to repair the device, ultimately hitting its peak in cost when the machine fails to operate. As early detection signs are often not noticeable without the aid of tools and sensors, there is a need to be ever-vigilant in making sure that these issues can be detected before they occur. This often involves conducting routine inspections, which may be a complex task, especially when a large number of machines or devices work together, for instance in a production line.

An anomaly can be seen as part of a signal that deviates considerably from the ordinary observed signal, i.e. when the device is operating normally. Therefore anomalies can be an efficient indicator of early equipment malfunction, given that the relevant signals are being examined.

In its simplest form anomalies are detected by a domain expert (e.g. a trained operator) by visual inspection of the sensor measurement data. Experts observe large peaks/dips, heavy fluctuations, or other large scale trends and determine whether they are within expected range for the process. Such approach requires contextual understanding of what is measured and one can expect from such measurement based on understanding of physical principles behind machine components. Obviously, observing multiple measurements on a regular basis can become quite time-consuming for the experts. In addition, it has a limited scalability since only a selected group of experts is able to interpret the signals. As a result, often issues are not detected in a timely fashion.

### SUMMARY

There is a need to reduce equipment down time caused by unexpected breakdowns or equipment failures by better indicating when maintenance should be performed in advance, preferably without requiring high level expertise in understanding the available data.

Additionally, the existing methods may be cumbersome and difficult to implement in the field, often requiring a human expert operator to precisely adjust or finetune one or more operational parameters. There is a desire for improving the monitoring of the functioning of devices in various processes. Additionally, there is a desire for such monitoring system and method which is less complex, intrusive and/or expensive.

It is preferred to provide for a method and a system that obviates at least one of the above mentioned drawbacks.

Additionally or alternatively, it may be preferred to provide improved monitoring of internal operations of devices.

Additionally or alternatively, it may be preferred to provide an improved detection of irregular operations of one or more components of a device.

Additionally or alternatively, it may be preferred to provide for a method which can improve maintenance of a device or a part thereof.

Additionally or alternatively, it may be preferred to improve the efficiency of the monitoring of the internal functions of a device or a part thereof.

Thereto, a first aspect provides a method of monitoring a device, the method comprising: receiving a set of data indicative of at least one operational parameter of the device within a predetermined time interval; calculating, based on the set of data, an identifier which uniquely identifies the set of data; and determining at least one deviation between the identifier and at least one reference identifier for the at least one operational parameter of the device.

This provides an advantageous way of detecting when the device behaviour in some way deviates from a normal operation. The anomaly detection is carried out by calculating a unique identifier of measurement data and compare the unique identifier with a reference identifier, for instance determined under verified normal condition of the device.

Based on the at least one deviation between the identifier and at least one reference identifier for the at least one operational parameter of the device, it may be determined whether the at least one monitored operational parameter of the device provides a desired underlying performance of the device. The method may involve systematically comparing calculated identifiers against a one or more relevant reference identifiers.

The identifier may be calculated to provide a nearly unique marker of an identification of a set of data. Optionally, the identifier is calculated by means of an identification unit which is configured to group identifiers according to their characteristics and therefore helps in the matching of one identifier fingerprint against one or more reference identifiers. In some examples, a database of reference identifiers is used, such that multiple deviations are calculated for finding a match. A query identifier that needs to be matched can be compared with a subset of reference identifiers in an existing database. This works in a similar way as identifying matching fingerprints with a fingerprint classification system. The identifier may capture particular patterns in the set of data, including the presence or absence of particular characteristic patterns within the signal.

The identifier may be a numerical structure derived from a content signal. The identifier may serve as a statistically unique identifier for the signal which is similar to a fingerprint from that content signal rather than different content signal that is registered. The identifier may be calculated based on a conversion rule. In some examples, the conversion rule is configured to only take some identified patterns into account. In some examples, the identified patterns can be broken down further prior to calculating the identifier.

Optionally the set of data in the predetermined time interval is a part of a data stream. The calculated identifier may be a compact and unique data stream identifier that is derived from, or comprises components that may be extracted from, underlying a monitored signal associated to the at least one operational parameter of the device. The calculated identifiers may correspond to a form of data fingerprints. The identifiers or data fingerprints may be robust to modifications on the signal such as distortions, noise, etc. The data fingerprints can be efficiently stored in a database and searched to enable signal identification.

Optionally the identifier forms a digital fingerprint of the set of data within the predetermined time interval, the digital fingerprint representing a unique identification of a working regime associated to the at least one operational parameter.

The set of data indicative of at least one operational parameter of the device within a predetermined time interval may have a unique profile which can be easily captured and compared using identifiers. Similar to fingerprints, dataprint features contained in each successive set of data of the same operational parameter of the device may be almost unique under normal operating conditions. The identifier allows recognizing the identity of the set of data by using characteristics of a dataprint within the set of data. Optionally, the monitored signals are pre-processed in order to obtain the set of data, wherein the pre-processing involves a feature extraction step in which only relevant data is kept, for instance related to specific patterns.

The identifiers may depend on data based features in the set of data.

Optionally, the digital fingerprint is calculated using a statistical model which is configured to receive at least a portion of the set of data in the predetermined time interval as input.

The statistical model may be tuned to provide identifiers for particular dataset types. Optionally, the identifier is a set of values for a plurality of unique features extracted from the set of data. The set of data may be obtained by monitoring a signal indicative of at least one operational parameter of the device using a sensor.

The identifiers may be generated using a processor module. In some examples, the processor module is integrated in the device, wherein the device can perform automatic self-diagnostics and communicate the results to other devices or systems. The device may have a controller which is communicatively coupled to other devices or systems. For example, the device may have a wireless unit allowing wireless communication with remote devices or systems. A wired connection is also envisaged. It is also possible to have a combination of wired and wireless communication.

The identifier may uniquely correlate with, correspond to and/or relate to a particular unique identification characteristic of the monitored signal related to the received set of data. In some examples, the set of data may relate to one or more properties of the signal at one or more instances in time within the predetermined time interval. Based on the set of data the identifier may be determined in order analyze whether (or not) it uniquely correlates with, corresponds to and/or relates to reference identifier. In some examples, the deviation is determined by comparing the identifier with one or more past identifiers which is employed as a reference identifier. Based on the deviation, a degree of similarity can be determined, and if there is a match, meaning that the set of data correlates with, corresponds to and/or relates to reference data (e.g. related to past historic data), thus possibly confirming that the operational parameter of the device provides normal/regular device working conditions. A confirmation of a deviation between the identifier and the reference identifier may, for example, cause a remote device or system to provide output or instructions to a user, in order to enable the user to initiate maintenance or reparation of the device for example. Many variations of the concept and use of identifiers fall within the scope of the present disclosure.

Optionally, the identifier is determined based on a subset of features in the set of data, wherein one or more robust features are extracted of the set of data, and a robust hash signature is determined from the extracted one or more robust features.

The conversion rule may involve applying a hash algorithm. The hash algorithm may be applied to a selected portion of the content signal (e.g., some parts of the content signal) to generate the identifier. In some examples, the conversion rule is applied repeatedly to generate a healthy set of identifiers (e.g. hash sequence). This may improve the accuracy and reduce the risk of false positives. The content may be identified with a specified subset of the sequence. For example, the sequence may use sub-identifiers from each predetermined portion (e.g. 1/8th) of the data set and may require a predetermined number of sub-identifiers (e.g. 16) to identify the set of data. More sub-identifiers can be used to improve accuracy.

The identifier may be a content identifier extracted from the set of data. Different kinds of identifier resolvers employing specific rules governing the calculation of the identifier can be used.

In some examples, each reliable identifier is a digital hash extracted from its respective set of data, the digital hash being generated according to the step of digitally reducing a size of the data set through a digital reduction algorithm.

In some examples, the identifiers captures one or more identifying patterns in the data. Based on the comparing the calculated identifier to reference identifiers, it can be determined whether at least a portion of the particular identifying pattern in the monitored data set appears in a reference data set. In this way, the monitored data set can be linked to particular mode of operation of the device. Based on the deviation between the identifier and reference identifier, a similarity measure may be generated.

Optionally, the at least one deviation between the identifier and the at least one reference identifier is repeatedly calculated for subsequent time intervals.

Optionally, the deviation is used for generating a match percentage of the calculated identifier and the reference identifier. In response to the match percentage being smaller than or equal to a predetermined match level, an alert, alarm and/or notification of an anomalous operation may be generated.

Optionally, the at least one reference identifier is adjusted over time using more recent reference data.

Optionally, a sliding time-window is used for the selection of reference data based on which the reference identifiers are determined. In this way, advantageously, it is possible to gradually adapt to long-term changes that occur. Performing such dynamic thresholding may provide significant advantages, as conditions under which the device operates may slightly change over time. The model can adaptively adjust to learn more from recent data.

Optionally, as time progresses, the predetermined time interval is shifted such that more recent data is used for determining the at least one deviation.

In some examples, a plurality of reliable identifiers from a respective plurality of sets of data for successive predetermined time intervals are generated. The successive predetermined time intervals may have a partial overlap. However, it is also possible that a time delay is provided between the successive predetermined time intervals. It is also possible that the time intervals immediately follow one another. The plurality of reliable identifiers can be compared to one or more reference identifiers for determining the respective deviations.

Optionally, the set of data corresponds to an univariate signal associated to a single operational parameter of the device.

The method may monitor an univariate signal to detect anomalies. Anomalous behaviour in univariate time-series signal may be detected using the identifiers (cf. digital fingerprints). Univariate signal may indicate that signals indicative of the at least one operational parameter is measured only along a single dimension. Interactions between multiple measurements are not taken into account. Each measurement may be analyzed in isolation and various statistics may be calculated based on a reference window, in order to determine a reference identifier. This can be considered as a digital fingerprint of normal behaviour. Using the same process, the fingerprint of the data to be tested can be calculated, i.e. the identifier can be calculated, and compared to the reference fingerprint. The deviation between the calculated identifier, which is calculated based on the monitored data, and the reference identifier, which is determined under verified normal device operation, is easily interpretably by an expert. This provides the ability to generate automatic human-readable alerts or notifications.

Optionally, the set of data corresponds to a multivariate signal associated to multiple operational parameters of the device.

Multiple measurements can be used, instead of only a single measurement. The method may work with more advanced multivariate time-series models. For this purpose signal processing techniques (e.g. Fourier analysis, wavelet analysis, etc.) can be used. It may be beneficial to work with frequency domain analysis for instance if the data has high granularity, and/or when the at least one operational parameter of the device is frequency dependent, e.g. an operational parameter related to rotations per minute, interactions between gears in a machine, etc.

Advantageously, multiple measurements and their interactions are taken into account, which can increase the accuracy and the robustness. Furthermore, employing multiple measurements may require less level of domain-expertise for successful implementation. In this way, the method can be applied more efficiently. Moreover, this approach may better handle seasonality trends in the monitored signals from which the set(s) of data is generated. Additionally or alternatively, this approach may provide more flexibility, as it is easier to include additional features on per-need basis.

Optionally, a trained machine learning model is employed which is configured to identify interactions and/or dependencies between the plurality of operational parameters in the multivariate signal.

Using reference data, a model can be trained to recognize interactions and dependencies between measurements. The trained model can be employed to reconstruct test data. In case of normal/regular data, the reconstructed test data may resemble real data and the reconstruction error may be low. In case of anomalous/irregular data, the reconstruction error may be large, hence it is possible to discriminate from normal/regular data. The model can be a regression model. The model can be used based on the multiple measurements, as some models can be more suitable than others based on the type of interactions between the signals captured by means of the multiple measurements. Exemplary models are tree-based methods, neural networks, etc. However, other models such as Bayesian models can also be used.

Optionally, an index of a plurality of reference identifiers for the at least one operational parameter of the device are used.

It is envisaged that an index can be formed within a database, the index comprising a plurality of unique reference identifiers correlating to a plurality of operating conditions, e.g. irregular operating condition, different types or levels of irregular operating conditions, etc. Each of the identifiers calculated based on the received set of data may be compared to the plurality of unique reference identifiers within the database.

Optionally, a plurality of sensors are used for collecting different sets of data indicative of different operational parameters of the device, wherein identifiers calculated from the different sets of data are compared to respective reference identifiers for determining a plurality of deviations used for monitoring the operation of the device.

A statistical identifier (cf. fingerpring) may be calculated in different ways. By determining a deviation between the calculated identifier and the reference identifier, the two 'fingerprints' can be compared. In this way, it can be determined whether identifiers of a test window fall outside of specified thresholds (i.e. absolute or relative to the reference). The identifiers act as fingerprints of the signal. The reference identifier (cf. reference fingerprint) can be adjusted. For this purpose, the reference period may be changed. For example, a reference period may include two full weeks of data. As the time progresses, time windows for extracting such data are adjusted so that model makes comparison with more recent machine behaviour. The time window can thus be shifted as time progresses. Advantageously, the accuracy and robustness of the monitoring of the operations of the device can be significantly improved in this way.

Optionally, a detection of an operational anomaly is triggered in case a value indicative of a size of the at least one deviation is larger than a preset threshold value.

Optionally, a notification is sent wirelessly to a mobile device of one or more operators. In this way, the operators can be more efficiently notified when a specific part or device needs to be repaired, replaced, or maintained in order to prevent breakdown to happen. Different kinds of warning messages may be sent to the operators, providing additional information with regard to the anomaly, such that an initial assessment can be done remotely by the operator.

Optionally, the detection of an operational anomaly is triggered only when the value indicative of the size of the deviation exceeds the preset threshold value within a predetermined timespan.

Optionally, the threshold are adjustable. In this way, the thresholds can be changed, without requiring a model re-deployment. Advantageously, the operator can set thresholds for the measured and monitored parameters in order to understand patterns and/or co-relationships between out-of-thresholds showings and incidents happening on the same device. Under static conditions (example a filler device working at nominal speed), values of the signal may tend to oscillate around some central value. The operator can define how much the calculated identifier change relative to reference identifier for the model to raise a flag or alarm (cf. user notification).

Optionally, calculating the identifier is carried out using an algorithm, wherein the reference identifier is calculated using the same algorithm based on a set of reference data under verified normal operation of the device.

Optionally, the method includes gathering reference data. This may involve deciding which measurements are to be used for anomaly detection, and determine conditions under which this signal has normal and/or stationary behaviour. For this purpose, data can be gathered for some period of time, for example minutes, hours or weeks. In some examples, at least few months of data may be collected. The minimum amount of data may depend on the time window desired to calculate reference information from. It is assumed that the reference data is relatively free of anomalies.

Optionally, the reference identifier is repeatedly recalculated over time.

Optionally, transient signal values associated to at least one operational parameter are measured at a plurality of time steps, wherein the set of data indicative of at least one operational parameter of the device within the predetermined time interval includes a plurality of measurement points at a plurality of consecutive time steps within said predetermined time interval.

Optionally, the operational anomaly is categorized into an anomaly family or anomaly type based on the at least one deviation between the identifier and the at least one reference identifier.

Parameters which reflect signal characteristics (average, median, volatility, ...) can be stored in a database and accessed via a platform, allowing to explore machine signal behaviour over time. A good scalability can be obtained when the device signal behaviour is known and/or when default parameters are used.

The reference identifier may for example easily capture the condition that a monitored signal has to oscillate around an expected value (cf. stationary signal). Furthermore, in some examples, the reference identifier may capture the condition that the signal is expected to exhibit static behaviour. Various other characteristics can easily be captured using unique identifiers.

Optionally, the device is a machine or a part thereof.

The method may be used for monitoring a coupled system. The coupled system may have a plurality of devices. Alternatively or additionally, each device may generate a plurality of sets of data indicative of at least one operational parameter of the device. It is also envisaged that the one or more devices of the system are provided with multiple sensors for generating the plurality of sets of data. A user interface may be provided which provides a general overview of the operation of the coupled system. For example, the user interface may show an operational situation across all devices, machines, sub-systems, lines, components, etc. of the coupled system at which the monitoring method is employed.

Optionally, the method is performed for proactive maintenance.

Optionally, the method includes performing an anomaly detection, wherein the anomaly detection is provided for detecting patterns. Such anomaly detection may capture the domain knowledge of an expert and assist the expert in finding issues more quickly. Additionally, the anomaly detection may detect hidden patterns or non-linear behaviour that is not easily detected by a human expert. This approach leads to condition-based maintenance in which maintenance experts are assisted in doing their job more efficiently.

Optionally, a prediction is made on when the device will fail, based on the detected deviation. The time to react may depend on the measurement type and its adequacy to capture the underlying physical process.

Optionally, a human readable explanation on why a deviation is flagged is provided.

In some examples, the identifier is generated by extracting features of the set of data using a spectrogram. The generated identifier can be compared to one or more reference identifiers to determine a deviation. In some examples, a database is searched for a reference identifier similar to the identifier generated based on the set of data. The method may include recognizing an operational behaviour of the device based on a result of the search.

In some examples, a pre-processing step is carried out of re-sampling the monitored signal so that a set of data is obtained with a sampling rate which coincides with a sampling rate of the reference set of data used for determining the reference identifier.

According to a second aspect, a system for monitoring a device is provided, the system comprising a controller configured to: receive a set of data indicative of at least one operational parameter of the device within a predetermined time interval; calculate, based on set of data, an identifier which uniquely identifies the set of data; and determine at least one deviation between the identifier and at least one reference identifier for the at least one operational parameter of the device.

Extracting the identifiers from underlying data content in the set of data may include extraction of robust features of the data content. For example, a robust hash signature may be generated from the extracted features. Advantageously, extracting such robust features allows those features to compactly represent the underlying perceptual content with invariance under various processing operations. Therefore, relatively small changes in feature values may not result in drastic changes in the extracted hash bits, which imparts robustness to the fingerprints. Furthermore, robust hash extraction allows the extracted fingerprint bits to be unique. This may significantly affect a required search time, i.e. a time taken to find a match with a reference identifier or in a database of reference identifiers (cf. reference fingerprints). Advantageously, a highly efficient algorithm can be obtained in this way.

The system may provide an improve way for understanding where a problem or issue has occurred or where it will affect a process the most. The method may be applied for multiple devices or components in a larger system. A high-level overview of critical machines, components and their common failure modes may be provided. The method may asses how often a failure mode has occurred, the response time of repair, and how well this compares to set benchmarks of the manufacturer based on historic data. The method further provides a way to better gain knowledge about what has happened and what is currently ongoing to assess how the situation is evolving. Without requiring high-level expertise, it can be better judged how deteriorated an operation of the device is, and assess how quickly the situation is evolving. Additionally, as identifiers are compared with each other, the method may allow to better determine why a component malfunctions. In this way, it can be easier to judge whether to stop the device and intervene or wait till the next maintenance window. Based on the determined deviations, it one or more failure mode(s) can be determined. An improved warning-time window may be provided. It can be easier to assess the relation between the failure mode and selected measurements through analysis of historic examples.

For example, a database of reference identifiers may be searchable for comparison to the calculated identifier based on the set of data. A best match may be looked up in terms of smallest distance from the query identifier.

Matching the identifier, which conveys characteristic information related to the set of data indicative of at least one operational parameter of the device within a predetermined time interval, with one or more preset reference identifiers, may allow to efficiently evaluate the behaviour of the at least one operational parameter.

An action may be carried out responsive to unsuccessful matching due to a high deviation between the identifier and the reference identifier, wherein for example the deviation exceeds a preset threshold value. The action may involve notifying a user, triggering an alert, performing more diagnostic activities, schedule a maintenance of the device, schedule a reparation of the device, adjust an operational condition of the device (e.g. lower loading until problem resolved), etc.

Advantageously, the identifier and reference identifier can be easily compared to quickly and efficiently determine whether the received set of data is sufficiently similar to the reference set of data based on which the reference identifier is determined.

It will be appreciated that data sets associated to various signals can be monitored and received for calculating the identifier. For example, current, flow rate, consumption indices, power, pressure, acceleration, vibrations, frequency, temperature, electric voltage. Various other signals can be used. A combination of different signals is also envisaged.

According to a third aspect, a computer program product is provided, configured for performing, when run on a controller, the steps of the method according to the first aspect.

When an abnormal device behaviour is detected, it is possible to alert an operation to check the device. A computational model may be employed which is configured to compare measured signal values with reference values, wherein the amount of relative different between the measured signal values and the reference values can be specified, in order to achieve a balance between alerting on important events and avoiding alarm saturation.

Anomalous behaviour in the set of data indicative of the at least one operational parameter of the device within the predetermined time interval may be detected. The set of data may be obtained by performing measurements to obtain time-series signal. The time-series signal may be analysed for detecting anomalies by calculating an identifier and comparing said identifier with one or more reference identifiers.

A user interface may be provided in which the most recent events are displayed. The method may comprise indicating equipment (e.g. label, tag name) on which most anomalies have been detected in a selected time-window. A total number of events in a selected time window may be displayed. The user interface may also be configured to indicate which part of the set of data that is flagged as anomalous. In some examples, an anomaly detection dashboard may be provided.

The received set of data, the calculated identifiers, the determined deviations, and/or the reference identifiers may be stored in a database. The historic data may be used to tweak or tune the model, in order to more accurately determine which deviations are to be flagged.

According to a fourth aspect, a non-transitory computer-readable medium is provided with software instructions for carrying out the computer implemented method according to the first aspect.

According to a further aspect, a method of monitoring a device is provided, comprising: receiving reference data; generating a reference fingerprint based thereon; calculating an operational fingerprint based on monitored data linked to at least one operational parameter of the device within a predetermined time interval; comparing the calculated operational fingerprint to the reference fingerprint.

Optionally, the reference fingerprint may be updated during monitoring. For example, a periodic updating of the reference fingerprint may be carried out.

The operational fingerprint and the reference fingerprint may be calculated over different time intervals, with different durations. If the operation fingerprint differs from the reference fingerprint in a particular way, this may indicate a failure or another reason for maintenance. Such anomaly detection may be employed for preventive maintenance.

Different types of signals can be monitored, from which the set of data indicative of at least one operational parameter of the device is determined. The signal may for instance be a current of a motor, vibrations, pressure, flow rate, speed, etc.

The device may have multiple signals monitored at particular components of the device. The user can be informed on which device, or a part of the device, an irregularity is detected. For example, a bottle filler in a brewery process may comprise multiple servo drives. For each of the drives a current and phase lags may be monitored. Based on that, a set of data within a predetermined time interval can be used to determine an identifier (cf. fingerprint) which can be compared to a reference identifier in order to determine a deviation. Once anomaly is detected, an action may be initiated, for example a user may be notified about the signal in which this anomaly was detected. In some examples, the operation of the device is adjusted based on the detection of an anomaly.

In some examples, the predetermined time intervals for collecting data is not changed over time. Hence, the predetermined time intervals may remain fixed. Optionally, multiple time intervals are checked for identical signal.

According to another aspect, a method of monitoring a device is provided, the method comprising: receiving a first set of data values of a signal indicative of an operational property of the machine within a first reference time window; determining, based on the first set, reference signal data in accordance with a first algorithm; receiving a second set of data values of the signal indicative of the operational property of the machine within an operational time window; and determining, based on the second set, operational signal data in accordance with the first algorithm; comparing the reference signal data with the operational signal data; and registering detection of the difference as an anomaly in case the operational signal data differs from the reference signal data by more than a first pre-determined threshold.

Optionally, the reference signal data is recalculated over a second reference time window. Optionally, recalculation of the reference signal data is performed after lapse of a first pre-determined time period after the first reference time window. Additionally or alternatively, recalculation of the reference signal data is performed if the operational data differs from the reference data with less than a second pre-determined threshold over a second pre-determined time period.

Optionally, the first threshold data is recalculated after calculating a new reference data.

Optionally, the signal represents at least one of: vibration, rotational movement, linear movement, stress, relative position, or an entity derived therefrom.

Optionally, the first algorithm comprises at least one of determining average, median, standard deviation, hash value, fingerprint, checksum of at least part of the received data.

Optionally, an anomaly is detected if the operational data differs from the reference data with more than a second pre-determined threshold over a second pre-determined time period.

Optionally, data values have timestamps associated therewith, consecutively in time.

Optionally, an anomaly is detected if the operational signal data is different from signal reference data more than a predetermined number of times in a predetermined time period.

Although the various aspects and further implementations may comprise computer apparatus and processes performed in a computer apparatus, the disclosure also extends to computer programs, particularly computer programs on or in a carrier, adapted for putting the disclosure into practice. The program may be in the form of source or object code or in any other form suitable for use in the implementation of the processes as disclosed. The carrier may be any entity or device capable of carrying the program.

"Optional" or "optionally" means that the subsequently described event or circumstance may or may not occur, and that the description includes instances where said event or circumstance occurs and instances where it does not.

The terms "coupled", "associated" and "connected," along with their derivatives, may be used herein to describe functional or structural relationships between components. The terms may be used to indicated that two or more elements are in either direct or indirect (with other intervening elements between them) physical, optical, communicative and/or electrical contact with each other, and/or that the two or more elements co-operate or interact with each other (e.g., as in a cause an effect relationship).

It will be appreciated that any of the aspects, features and options described in view of the method apply equally to the system and the described device and computer program product. It will also be clear that any one or more of the above aspects, features and options can be combined. In particular, the options provided above may be combined with the general inventive concept, with any one or more options, in any permutation.

### BRIEF DESCRIPTION OF THE DRAWING

The various aspects and variations thereof will further be elucidated on the basis of exemplary embodiments which are represented in a drawing. The exemplary embodiments are given by way of non-limitative illustration. It is noted that the figures are only schematic representations of aspects and variations thereof that are given by way of non-limiting example.

In the drawing:
Fig. 1 shows a schematic diagram of an embodiment of a system;
Fig. 2 shows a schematic diagram of exemplary data;
Fig. 3 shows a schematic diagram of exemplary data;
Fig. 4 shows a schematic diagram of exemplary data;
Fig. 5a, 5b, and 5c show a schematic diagram of exemplary successive predetermined time intervals; and
Fig. 6 shows a schematic diagram of a method.

### DETAILED DESCRIPTION

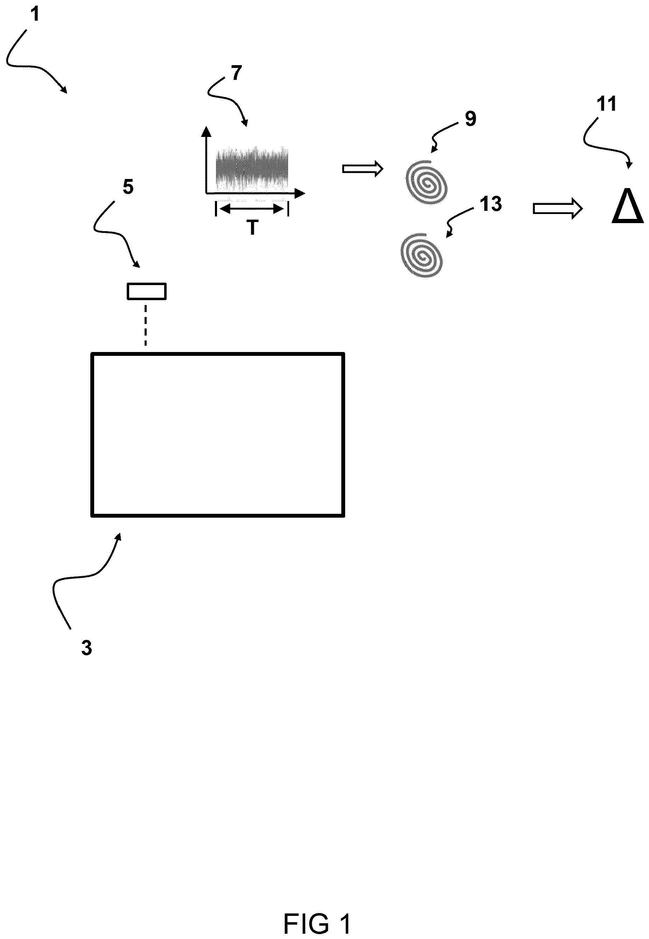

Fig. 1 shows a schematic diagram of an embodiment of a system 1 for monitoring a device 3. The system comprising a controller 5 configured to receive a set of data 7 indicative of at least one operational parameter of the device 3 within a predetermined time interval T; calculate, based on set of data 7, an identifier 9 which uniquely identifies the set of data 7; and determine at least one deviation 11 between the identifier 9 and at least one reference identifier 13 for the at least one operational parameter of the device 3.

To this end, the controller 5 comprises a processing unit, a storage unit, a data input unit and a communication unit as a data output unit. The processing unit is arranged to carry out the first aspect and any variations thereof, as discussed below in further detail. As such, the processing unit may be arranged to be programmed by means of a computer program product. The data input unit arranged to receive data from a sensor arranged to monitor an operational parameter of the device 3. The sensor may be comprised by the device 3, the controller 5 or the sensor may be placed external of both. The data input is arranged to provide the signal received from the sensor to the processing unit, either after processing or as raw data.

The storage module is arranged to store data received, data processed by the data input unit and/or data processed by the processing unit. Additionally or alternatively, the storage module may comprise a preferably non-transitory medium arranged to store a computer program product for programming the processing unit to carry out the first aspect and/or variations thereof.

The communication unit may be arranged to send out data received from the sensor, from the data input unit, processed by the processing unit, other data or a combination thereof to a data processing device at a location remote from the device 3. The data processing device may be arranged to carry out one or more steps of the first aspect or variations thereof. As such, part or all parts of the first aspect and variations thereof may be carried out by the controller 5 as well as by the data processing device jointly, in parallel or in series.

The identifier 9 and reference identifier 13 are illustrated as a digital fingerprint. However, it will be appreciated that such identifiers or digital fingerprints can have various forms. It can for instance be a hash value.

The reasons for flagging particular behaviour of the device may be easy to understand for an end user (e.g. operator). Results are easy to interpret, as the detection of a deviation of an identifier with respect to a reference identifier does not require complex model knowledge and/or further analysis. Information on which device, and/or which part of the device, an anomaly has been identified can be displayed to a user, for instance resulting in a notification or an alarm.

Depending on an algorithm used, calculation of the identifier may be sensitive to irregularities in the set of data. In some examples, the calculation of the identifier (cf. digital fingerprint) may be particularly sensitive for an irregular rising and/or falling of the data values with respect to a plateau level, wherein during the irregular rising the monitored data value momentary spikes before it returns to its plateau level, wherein during the irregular falling the monitored data value momentary drops before it returns to its plateau level. The identifiers may be used to robustly detecting irregularities in the set of data which are linked to one or more operational irregularities of the device. For instance, when the set of data is represented in a graph in function of time, an unexpected spike or dip fluctuation can be visible. Such spike fluctuation or dip fluctuation in the data can indicate an irregular operation of one or more components of the device which are associated to the at least one operational parameter. Such sudden positive peaks or negative peaks (trough in graph) breaking out of the plateau level may generate a significant deviation between the calculated identifier and the reference identifier.

The plateau level can be a range (cf. band/channel/envelope) with a baseline and an upper limit and a lower limit. The irregularity in the set of data can be seen as a situation in which the data value suddenly breaks out of the range of the plateau level. The data value may have positive and/or negative peaks falling within the plateau level, which will not result in significant impact on the calculated identifier, and positive and/or negative peaks breaking out of the plateau level, which will result in significant impact on the calculated identifier.

It will be appreciated that a spike or peak in the data values in the set of data can be considered as a sharp rise (i.e. sudden steep increase) followed by a sharp decline. This sharp momentary increase in data value or value indicative of the at least one operational parameter of the device can result in significant deviations of the calculated identifier from the reference identifier which is determined using a reference data set (device working under normal conditions). The reverse also applies to a dip (cf. negative peak). A dip can be considered as a momentary drop in a level of the data value before it returns to its plateau level. The dip may include a brief downward slope followed by an upward one.

The controller 5 may be communicatively coupled to the device 3. This may be performed wiredly and/or wirelessly. However, it is also possible that the controller is integrated within the device, or within a component of the device. The controller 5 may be configured to communicate with other controllers associated to other devices of a coupled system of devices, for instance a brewery production line with a large number of devices and sub-components. It is also possible that the devices are communicatively coupled to one or more central controllers.

The device 3 may be a sub-component of another device, a machine, a system, a process, etc. For example, electric servo-drives may be critical for the operation of filler machines in a brewery process. A failure would result in the brewery process to have production down time. Furthermore, as an example, vacuum pumps in filler machines may have a purpose of removing residual oxygen. The failure may result in wasted products, which can result in huge costs and production delays. In these examples, the electric servo-drives, vacuum pumps, or any other components or machines may be monitored in order to detect anomalous operations.

Various operational parameters may be monitored. Examples include but are not limited to: data indicative of actuation of an engine, data indicative of a current of a motor, data indicative of vibrations, data indicative of accelerations, data indicative of velocity of a moving part, data indicative of a phase lag in an electrical signal, data indicative of a pressure, data indicative of a fluid flow. A combination of different operational parameters is also possible. Furthermore, it is also envisaged that more complex operational parameters are monitored for instance involving, electro-mechanical parameters, sound, audio, video, etc.

Optionally, the reference identifiers are determined periodically. This may involve re-calculating the reference identifiers in order to obtain more recent reference identifiers. With other words, the 'reference fingerprints' maybe changed over time. The updated reference identifiers may provide for improved monitoring. The updated reference identifiers may be used for comparison with the identifier calculated based on the received set of data indicative of the at least one operational parameter of the device within the predetermined time interval. It is preferred the reference identifiers are calculated using the same or equivalent algorithm as used for calculating the operational identifier of which the behaviour is to be monitored.

In an example, the device 3 is a pressure control system pump. A sudden decrease of pressure might indicate a leakage. If the decrease lasts for a longer period of time, it might also indicate a defective impellor or pump. If there is a just a sudden increase in pressure, there might be an obstruction in the pipe that needs to be removed. Such possible technical issues may be better determined based on the calculated identifier, the reference identifier and the deviation between the calculated identifier and the reference identifier. In some cases, a plurality of reference identifiers are used. For example, an index of reference identifiers may be employed, wherein a small deviation between the calculated identifier and one of the multiple of reference identifiers in the index of reference identifiers may pinpoint a particular anomaly. This provides an efficient and robust way of determining anomalies. Additionally, the anomalies may be detected faster.

In an example, the device 3 is a beer filtering installation comprising a plurality of sub-components. For example, when a filter of the filtering installation clogs up, there is a pressure increase in the pipes. If the pressure increases excessively, it will lead to damaged pumps, filters, and gaskets. The device may be monitored by using data from pressure sensors. The calculated identifier may be compared to one or more reference identifiers in order to determine a deviation. Based on the deviation, anomalous operation can be detected in a robust way.

In an example, the device 3 is a flow-control shaft. For example, the device may be configured to monitor data indicative of the flow.

In an example, the device 3 is a reservoir. For example, the device may be configured to monitor a data indicative of a level of medium inside the reservoir. For instance, level transmitter sensors may be provided. In some cases, electric interference, electric ground problems, faulty level of transmitters, dirt inside the tank, etc. may be detected by calculating the identifier and the determining a deviation between the calculated identifier and the reference identifier.

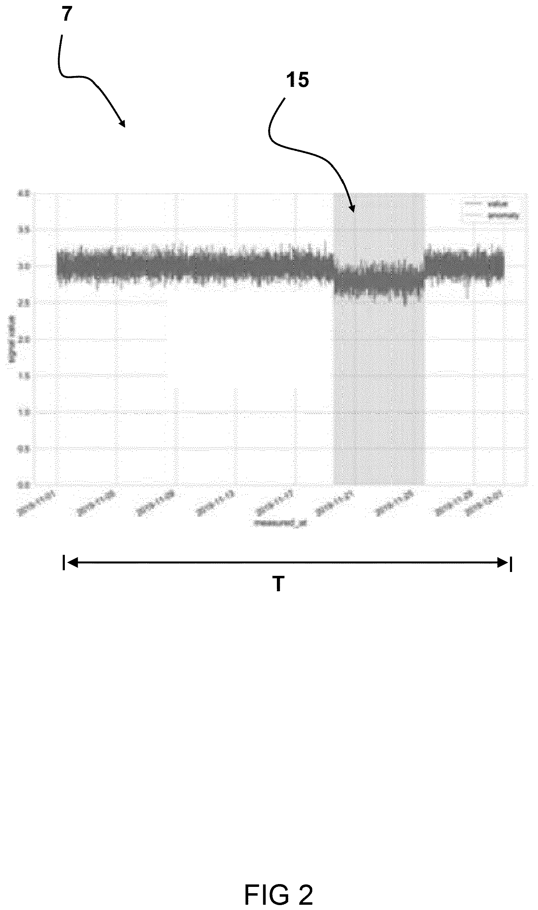

Fig. 2 shows a schematic diagram of an exemplary set of data 7 indicative of an operational parameter of the device within a predetermined time interval T. In the set of data 7, it can be observed that a portion 15 of the set of data 7 is irregular. This will result in a calculated identifier which will have a noticeable deviation with respect to the reference identifier. The reference identifier may be calculated on data not having such irregularity in the set of reference data. Hence, the deviation may result in this received set of data being flagged. An operational issue of the device may be diagnosed. As a result, one or more actions may be triggered, for instance notifying a user, ordering spare parts, scheduling a repair, etc. before critical breakdown has occurred.

In the shown example, a plateau level can be observed. The plateau level forms a band or range in which the data value is expected to be during normal conditions during normal operation of the device. Sudden abnormalities in the data value can bring the data value out of the range of the plateau level, which can result in significant changes in the calculated identifier. Comparing the resulting calculated identifier with the reference identifier will result in significant deviations, which can be an indication of an abnormal operation of the device.

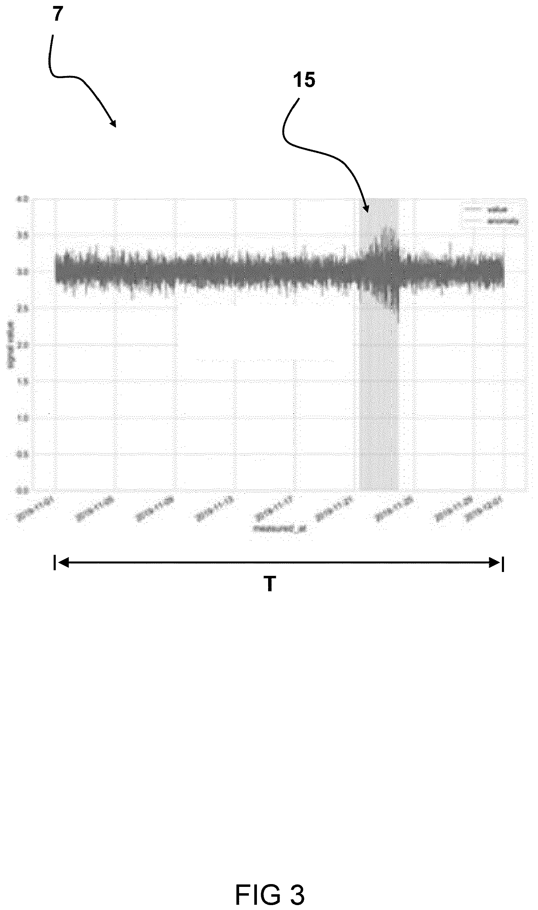

Fig. 3 shows a schematic diagram of exemplary set of data 7 indicative of an operational parameter of the device within a predetermined time interval T. Similar to example in fig. 2, a portion 15 of the set of data 7 is irregular. As a result, based on the deviation of the calculated identifier and the reference identifier, the irregularity can be effectively and accurately identified without requiring complex data processing models. The determined deviation may exceed a threshold value such that the set of data is flagged. This may result in one or more actions such that the operational issue can be fixed before critical breakdown.

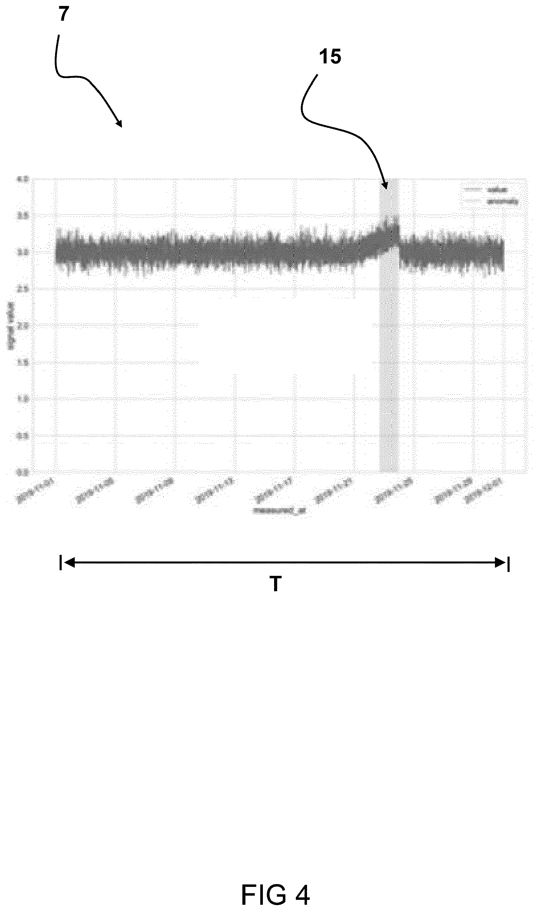

Fig. 4 shows a schematic diagram of exemplary set of data 7 indicative of an operational parameter of the device within a predetermined time interval T. Similar to the illustrated examples in figs. 2 and 3, a portion 15 of the set of data 7 is irregular. Although, the portion 15 of the set of data 7 is relatively narrow, it will result in a large deviation when the calculated identifier is compared to the reference identifier. In this way, the issue can be timely flagged and diagnosed. Advantageously, the necessary actions can be taken in order to perform reparations before the breakdown of the device, or function loss, has occurred.

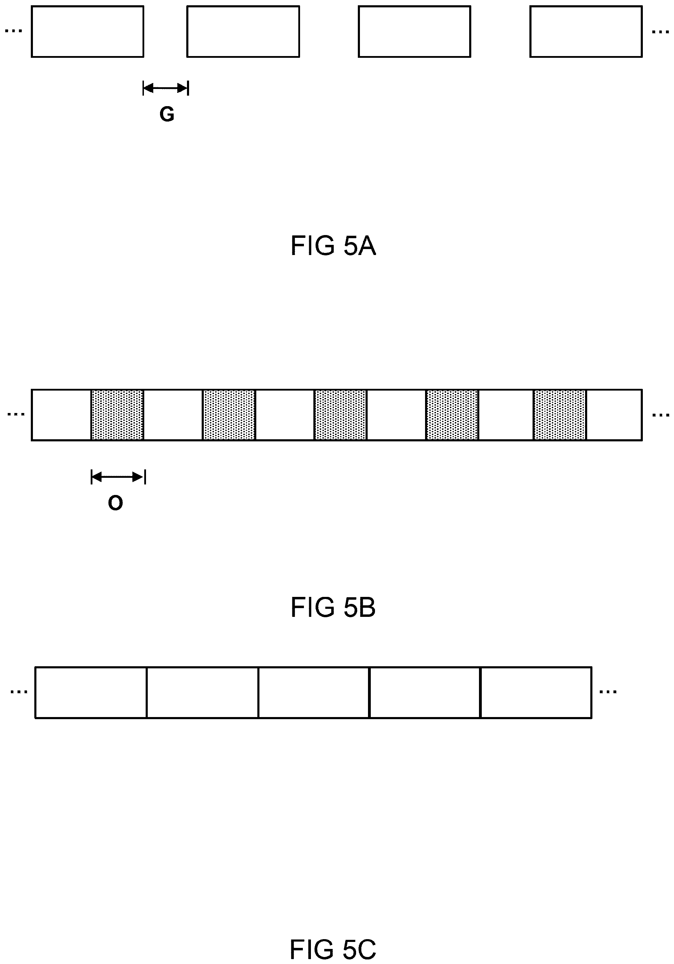

Fig. 5a, 5b, and 5c show a schematic diagram of exemplary successive predetermined time intervals. A signal associated to the at least one operational parameter of the device can be monitored, wherein sets of data are collected within predetermined time intervals for analysis. For each sets of data within the plurality of successive predetermined time intervals, a corresponding identifier may be calculated for determining a deviation between said corresponding identifier and at least one reference identifier for the at least one operational parameter of the device. This can be performed in different ways. As illustrated in fig. 5a, in some cases, the successive predetermined time intervals may have a time gap G therebetween. Depending i.a. on the device, operational parameter and the application it may vary from a couple of seconds to weeks or even months. As illustrated in fig. 5b, the successive predetermined time intervals may have an overlapping interval O. In some cases, this may significantly improve the robustness of the system. As illustrated in fig. 5c, the successive predetermined time intervals may be sequential without a time interval therebetween.

Optionally, the method is carried out periodically, wherein each iteration uses more recent set of data indicative of at least one operational parameter of the device within the predetermined time interval. In some examples, the method steps are carried out at a certain frequency, for examples every 10 minutes, every 15 minutes, etc.

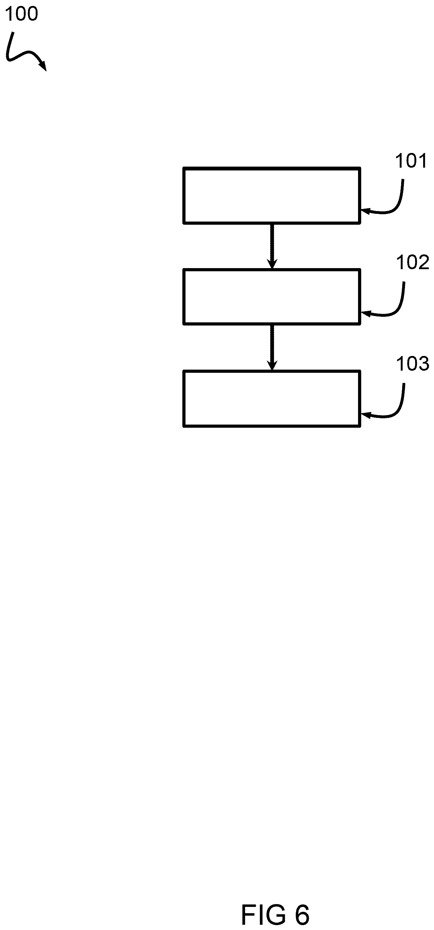

Fig. 6 shows a schematic diagram of a method 100 of monitoring a device. In a first step 101, a set of data indicative of at least one operational parameter of the device within a predetermined time interval is received. This may be obtained for instance by means of one or more sensors. However, the data may also be readily available. In a second step 102, an identifier which uniquely identifies the set of data is calculated based on the set of data. For this purpose, a conversion algorithm may be used, for instance a hashing algorithm for determining a digital fingerprint associated to the set of data. In a third step 103, at least one deviation between the identifier and at least one reference identifier for the at least one operational parameter of the device is determined.

According to the various aspects and variations thereof, it is possible to reduce device downtime caused by unexpected breakdowns or equipment failures by better indicating when maintenance should be performed in advance. Advantageously, the matter of the disclosure enables this without requiring high-level expertise from the operators.

A user interface may provide most recent flagged anomalies. A time that a particular anomaly has been flagged (i.e. flag time). Other information, such as for instance name of a unit (e.g. packaging line), name of the machine/device, name of the tag for which the anomaly was detected, and description elaborating on why a particular flag was generated can be indicated.

In some examples, the user interface may indicate a number of anomalies per tag name. In this way, the most troublesome components can be easily identified.

In some examples, the user interface may provide a number of anomalies per device. In this way, it can be determined whether the anomaly detections scale horizontally to other components, e.g. other sub-components, devices, machines, lines, etc. Advantageously, the most troublesome devices or sub-components of the device can be easily recognized.

In some examples, the user interface may provide a number of flags raised over a period of time for the device. Advantageously, this enables tracking the number of flagged anomalies over time for measurements associated with a particular device (e.g. servo drives, pump, etc.). A threshold may be defined, such that an alarm, alert and/or notification is generated once the number of hourly flags exceeds the threshold.

In some examples, the user interface is configured to enable signal exploration. The user interface may allow for filtering of the data. This can provide a convenient way to explore the measured signals, reference signals, the calculated identifiers, the reference identifiers, the overview of the flags over the period of time, etc. This effectively provides the opportunity to dive deeper into the behaviour of particular signals. Advantageously, users can explore correlations between signal and failure events and understand if threshold/alarm criteria need further adjustments. Hence, a highly dynamically adjustable system can be obtained, which can be tuned to the properties of the device.

Optionally, a time window of data which is to be used for determining the reference identifier is adjustable. The user may be allowed to select and/or adapt the time window of reference data used for determining the reference identifiers. For instance, a particular time window for which it is known that the device was operating under normal conditions.

Various parameters of the device can be used. For instance, a power supplied to an engine, a current provided to an engine, a speed of a device, a phase lag in the current of the motor, a voltage across an electric circuit of the device, etc.

Advantageously, the effect of a failure mode on a change in behaviour of a signal may be better captured using the identifiers.

In an example, the monitored device is a servo drive. The signals which are monitored are indicative to a current provided to the servo drive and phase lags. The types of failure modes can be defined as: servo drive misalignment, voltage surges, bearing issues within servo drive. The signals are expected to indicate issues early, leaving sufficient time to act (days to weeks) in case of commonly expected failure modes.

In an example, the monitored device is a vacuum pump. The signal which is monitored may be vibrations. This can be done by means of accelerometers, however, other means for monitoring vibrations can also be used (e.g. laser vibrometer, strain gauge, etc.). The type of failure mode can be defined as bearing failure. The signals are expected to indicate irregular operation of the vacuum pump at least a few weeks before critical failure.

It will be appreciated that the method may include computer implemented steps. All above mentioned steps can be computer implemented steps. Embodiments may comprise computer apparatus, wherein processes performed in computer apparatus. The disclosure also extends to computer programs, particularly computer programs on or in a carrier, adapted for putting the various aspects and variations thereof into practice. The program may be in the form of source or object code or in any other form suitable for use in the implementation of the processes according to the disclosure. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the various aspects and variations thereof are described with reference to specific examples of embodiments of the various aspects. It will, however, be evident that various modifications, variations, alternatives and changes may be made therein, without departing from the essence of the disclosure. For the purpose of clarity and a concise description features are described herein as part of the same or separate embodiments, however, alternative embodiments having combinations of all or some of the features described in these separate embodiments are also envisaged and understood to fall within the framework of the disclosure as outlined by the claims. The specifications, figures and examples are, accordingly, to be regarded in an illustrative sense rather than in a restrictive sense. The disclosure is intended to embrace all alternatives, modifications and variations which fall within the spirit and scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. In an electronic computer arrangement, a method of monitoring a
device, the method comprising:
receiving a set of data indicative of at least one operational parameter of the device within a predetermined time interval;
calculating, based on the set of data, an identifier which uniquely identifies the set of data using a first algorithm; and
determining deviation data comprising data on occurrence of at least one deviation between the identifier and at least one reference identifier for the at least one operational parameter of the device.

2. The method according to claim 1, wherein the identifier forms a digital fingerprint of the set of data within the predetermined time interval, the digital fingerprint representing a unique identification of a working regime associated to the at least one operational parameter.

3. The method according to claim 1 or 2, wherein the digital fingerprint is calculated using a statistical model which is configured to receive at least a portion of the set of data in the predetermined time interval as input.

4. The method according to any one of the preceding claims, wherein the identifier is determined based on a subset of features in the set of data, wherein one or more robust features are extracted of the set of data, and a robust hash signature is determined from the extracted one or more robust features.

5. The method according to any one of the preceding claims, wherein the set of data corresponds to a multivariate signal associated to multiple operational parameters of the device.

6. The method according to claim 5, wherein a trained machine learning model is employed which is configured to identify interactions and/or dependencies between the plurality of operational parameters in the multivariate signal.

7. The method according to any one of the preceding claims, wherein a detection of an operational anomaly is triggered in case a value indicative of a size of the at least one deviation is larger than a preset threshold value.

8. The method according to claim 7, wherein the detection of an operational anomaly is triggered only when the value indicative of the size of the deviation exceeds the preset threshold value within a predetermined timespan.

9. The method according to any one of the preceding claims, wherein calculating the identifier is carried out using an algorithm, wherein the reference identifier is calculated using the same algorithm based on a set of reference data under verified normal operation of the device.

10. The method according to any one of the preceding claims, wherein transient signal values associated to at least one operational parameter are measured at a plurality of time steps, wherein the set of data indicative of at least one operational parameter of the device within the predetermined time interval includes a plurality of measurement points at a plurality of consecutive time steps within said predetermined time interval.

11. The method according to any of the preceding claims, further
comprising:
receiving device status data;
determining a relation between the device status data and the deviation.

12. The method of claim 11, wherein the device status data is provided with status timing information and the deviation data is provided with deviation timing information, the method further comprising:
determining a relation between status data and deviation data over time.

13. The method of claim 12, further comprising:
determining, based on the device status data, a device event related to the device;
determining, based on the status timing information and the deviation timing information, a time interval between the device event and occurrence of the deviation.

14. The method of claim 13, further comprising:
determining, based on the device status data, a multitude of device events related to the device;
determining, based on the status timing information and the deviation timing information, time intervals between the device event and occurrence of one or more deviations;
identifying, from the multitude of determined device events, a first device event related to a specific part of the device and a second device event related to the specific part of the device;
identifying, from the deviation data, a first occurrence of a first deviation and a second occurrence of a second deviation; and
wherein a first time interval between the first device event and the first occurrence differs less than a pre-determined relation time interval from a second time interval between the second device event and the second occurrence.

15. A system for monitoring a device, the system comprising a controller configured to:
receive a set of data indicative of at least one operational parameter of the device within a predetermined time interval;
calculate, based on set of data, an identifier which uniquely identifies the set of data; and
determine at least one deviation between the identifier and at least one reference identifier for the at least one operational parameter of the device.
